# EUROPEAN PATENT SPECIFICATION

(11) **EP 2 469 775 B1**
(45) Date of publication and mention of the grant of the patent: **31.05.2017**
(21) Application number: 10809525.8
(22) Date of filing: 09.07.2010
(51) Int. Cl.: H04L 12/723

(54) **INFORMATION TRANSMISSION METHOD, COMMUNICATION DEVICE AND COMMUNICATION SYSTEM**
INFORMATIONSÜBERTRAGUNGSVERFAHREN, KOMMUNIKATIONSVORRICHTUNG UND KOMMUNIKATIONSSYSTEM
PROCÉDÉ DE TRANSMISSION D'INFORMATIONS, DISPOSITIF DE COMMUNICATION ET SYSTÈME DE COMMUNICATION

(30) Priority: 21.08.2009 CN 200910167224
(43) Date of publication of application: 27.06.2012
(73) Proprietor: Huawei Technologies Co., Ltd., Longgang District Shenzhen, Guangdong 518129 (CN)
(72) Inventor: SUN, Jun, Shenzhen Guangdong 518129 (CN)
(74) Representative: Isarpatent
(86) International application number: PCT/CN2010/075072
(87) International publication number: WO 2011/020392

(56) References cited:
- EP-A2- 1 202 501
- CN-A- 1 503 532
- CN-A- 1 658 610
- US-A1- 2006 133 298
- US-A1- 2007 058 607
- US-B1- 6 985 959
- US-B1- 7 457 277

## Description

### FIELD OF THE INVENTION

The present invention relates to the field of communication technologies, and in particular, to an information transmission method, a communication device and a communication system.

### BACKGROUND OF THE INVENTION

A network formed by nodes having different switching granularities or technologies is referred to as a multi-layer network (Multi-layer Network), and a control plane is overlaid on the network to form a multi-layer Automatically Switched Optical Network (ASON, Automatically Switched Optical Network)/Generalized Multi-Protocol Label Switching (GMPLS, Generalized Multi-Protocol Label Switching) network. In the multi-layer ASON/GMPLS network, there are various traffic engineering (TE, Traffic Engineering) links of different switching types and capacities, and there are also control channels, including intrinsic in-band/in-fiber control channels of underlying real links and new in-band/in-fiber control channels formed by channel overheads of virtual TE links.

In the prior art, ASON/GMPLS enables nodes in the network to synchronize TE topology information by flooding attribute information of TE links on control channels through a control-plane routing protocol (for example, the Open Shortest Path First-Traffic Engineering (OSPF-TE, Open Shortest Path First-Traffic Engineering) protocol). According to a flooding mechanism of the existing link-state routing protocol OSPF-TE, attribute information of one TE link is advertised through a Traffic Engineering Link State Advertisement (TE LSA, Traffic Engineering Link State Advertisement) packet. All local TE LSA packets generated by a node need to be flooded out from all control channels of the node; after a node receives a new TE LSA packet from a control channel, assuming that a neighbor node sending the TE LSA packet is a node N, the node receiving the new TE LSA packet needs to flood the TE LSA packet out from all control channels except for that whose neighbor node is the node N.

The prior art has the following disadvantages: the flooding mechanism in the prior art is suitable for a single-layer network, but if the flooding mechanism is adopted for a multi-layer network having more TE links and more control channels than the single-layer network, the number of TE LSA packets flooded in the network is multiplied, seriously affecting the routing performance of the network.

US 7 457 277 B1(SHARMA VISHAL [US] ET AL) discloses a system and method of implementing peer model architecture in integrated optical networks. Specifically, heterogeneous domains of nodes share a common control plan via routing and signaling adjacencies established through a network layer control channel.
US 2007/058607 A1 (MACK-CRANE T B [US] ET AL MACK-CRANE T BENJAMIN [US] ET AL) discloses a route calculation is performed for a desired signal to determine a route through the telecommunications network for the signal. The route calculation takes into account the various connection type attributes, availability, and adaption costs in determining the shortest route for the signal through the telecommunication network.

### SUMMARY OF THE INVENTION

The present invention is defined in the appended independent claims to which reference should be made. Advantageous features are set out in the appended dependent claims.

It can be seen from a first technical solution according to the embodiments of the present invention that, in a multi-layer network, according to a layer type of a traffic engineering link corresponding to attribute information of the traffic engineering link in a locally obtained data packet, a control channel allowing flooding the data packet is looked up based on a preset filtering rule, and then the obtained data packet is sent from the control channel allowing flooding to connected a neighbor node, so that unlike the prior art, the obtained data packet does not need to be sent on all control channels. Therefore, the number of data packets sent may be greatly reduced, thereby reducing the amount of bandwidth occupied during information transmission, and effectively improving the routing performance of the network.

It can be seen from a second technical solution according to the embodiments of the present invention that, in a multi-layer network, when a data packet is obtained non-locally, a layer type of a control channel receiving the data packet is determined; a control channel of the same layer type as the control channel receiving the data packet is used as a control channel allowing flooding the data packet, and then the obtained data packet is sent from the control channel allowing flooding to connected a neighbor node, so that unlike the prior art, the obtained data packet does not need to be sent on all control channels. Therefore, the number of data packets sent may be greatly reduced, thereby reducing the amount of bandwidth occupied during information transmission, and effectively improving the routing performance of the network.

### BRIEF DESCRIPTION OF THE DRAWINGS

FIG. 1 is a flowchart of an information transmission method according to Embodiment 1 of the present invention;
FIG. 2 is a flowchart of an information transmission method according to Embodiment 2 of the present invention;
FIG. 3-a is a schematic diagram of Condition 1 of an OTN network according to Embodiment 3 of the present invention;

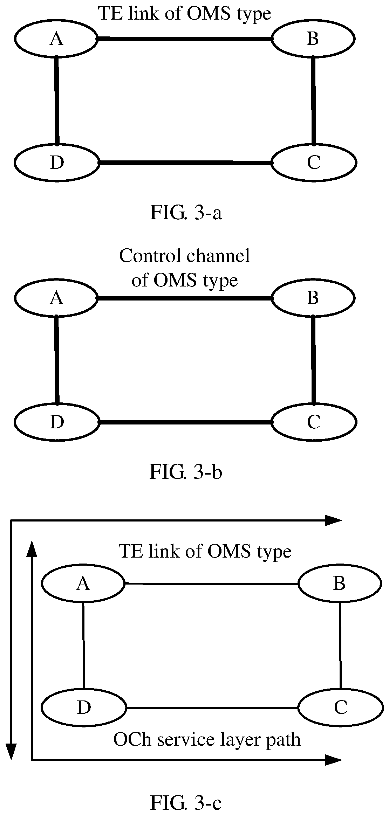

FIG. 3-b is a schematic diagram of Condition 2 of an OTN network according to Embodiment 3 of the present invention;
FIG. 3-c is a schematic diagram of Condition 3 of an OTN network according to Embodiment 3 of the present invention;

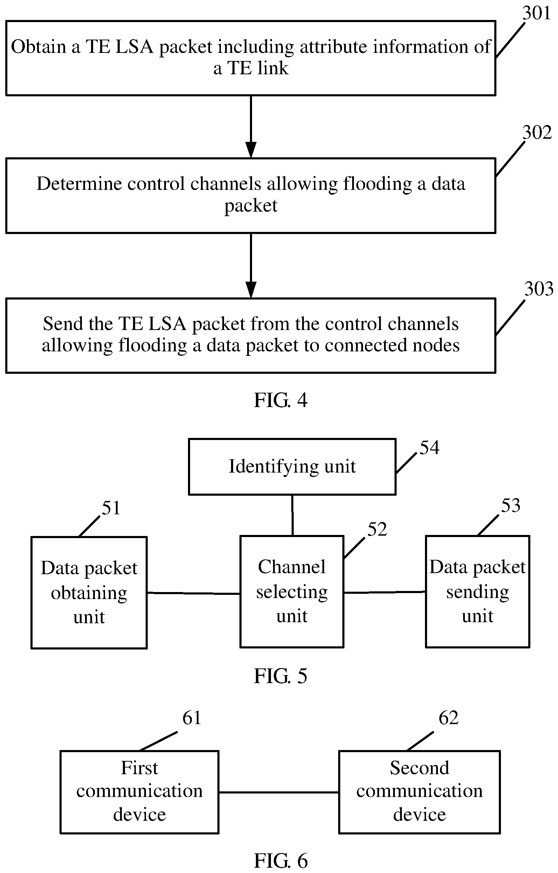

FIG. 4 is a flowchart of an information transmission method according to Embodiment 3 of the present invention;
FIG. 5 is a schematic structural diagram of a communication device according to an embodiment of the present invention; and
FIG. 6 is a schematic structural diagram of a communication system according to an embodiment of the present invention.

### DETAILED DESCRIPTION OF THE EMBODIMENTS

Embodiments of the present invention provide an information transmission method, which can improve the routing performance of the network during information transmission. Embodiments of the present invention also provide a corresponding communication device and a communication system. Detailed descriptions are given below respectively.

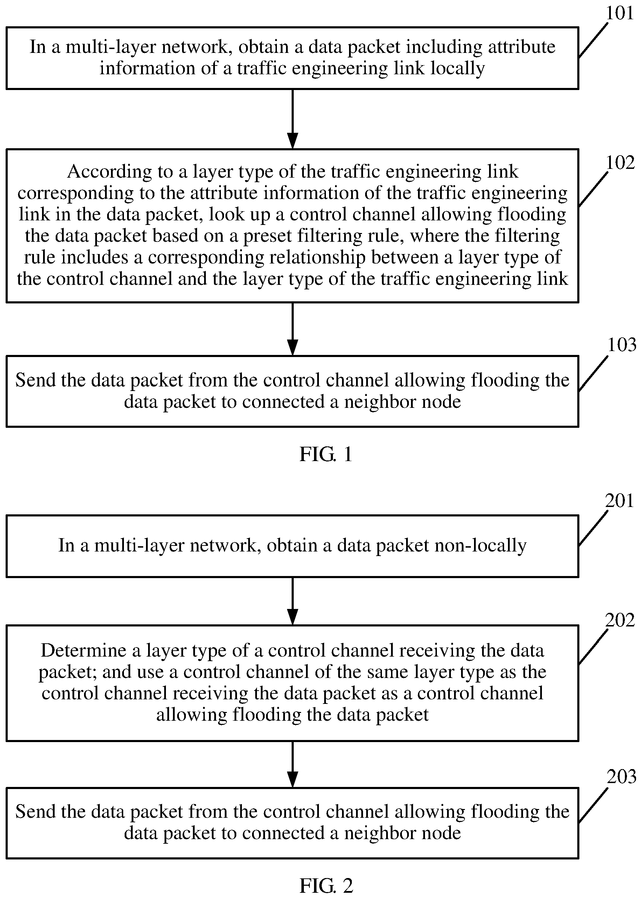

FIG. 1 is a flowchart of an information transmission method according to Embodiment 1 of the present invention, which mainly includes the following steps.
Step 101: In a multi-layer network, obtain a data packet including attribute information of a traffic engineering link locally.
Step 102: According to a layer type of the traffic engineering link corresponding to the attribute information of the traffic engineering link in the data packet, look up a control channel allowing flooding the data packet based on a preset filtering rule, where the filtering rule includes a corresponding relationship between a layer type of the control channel and the layer type of the traffic engineering link.
   The layer type is identified by a layer type field independently, or identified by a combination of an encoding type field and a signal type field.
Step 103: Send the data packet from the control channel allowing flooding the data packet to connected a neighbor node.

It can be seen from the content in Embodiment 1 of the present invention that, in a multi-layer network, according to a layer type of a traffic engineering link corresponding to attribute information of the traffic engineering link in a locally obtained data packet, a control channel allowing flooding the data packet is looked up based on a preset filtering rule, and then the obtained data packet is sent from the control channel allowing flooding to connected a neighbor node, so that unlike the prior art, the obtained data packet does not need to be sent on all control channels. Therefore, the number of data packets sent may be greatly reduced, thereby reducing the amount of bandwidth occupied during information transmission, and effectively improving the routing performance of the network.

FIG. 2 is a flowchart of an information transmission method according to Embodiment 2 of the present invention, which mainly includes the following steps.
Step 201: In a multi-layer network, obtain a data packet non-locally.
Step 202: Determine a layer type of a control channel receiving the data packet; and use a control channel of the same layer type as the control channel receiving the data packet as a control channel allowing flooding the data packet.
   The layer type is identified by a layer type field independently, or identified by a combination of an encoding type field and a signal type field.
Step 203: Send the data packet from the control channel allowing flooding the data packet to connected a neighbor node.

It can be seen from the content in Embodiment 2 of the present invention that, in a multi-layer network, when a data packet is obtained non-locally, a layer type of a control channel receiving the data packet is determined; a control channel of the same layer type as the control channel receiving the data packet is used as a control channel allowing flooding the data packet, and then the obtained data packet is sent from the control channel allowing flooding to connected a neighbor node, so that unlike the prior art, the obtained data packet does not need to be sent on all control channels. Therefore, the number of data packets sent may be greatly reduced, thereby reducing the amount of bandwidth occupied during information transmission, and effectively improving the routing performance of the network.

The technical solutions according to the embodiments of the present invention are described in further detail below with reference to Embodiment 3.

In Embodiment 3, a layer filtering rule of each node is configured in advance, and the nodes may be configured with the same or different layer filtering rules. The layer filtering rule includes a corresponding relationship between the layer type of the control channel and the layer type of the traffic engineering link, and the corresponding relationship includes allowing flooding data packets and prohibiting flooding data packets. The layer filtering rule may be shown in Table 1. The transversal direction represents the layer type of the control channel, the longitudinal direction represents the layer type of the TE link, and the intersection of the transversal direction and the longitudinal direction represents whether a TE LSA packet corresponding to a local TE link of a layer type y (y=1, 2, 3, ..., n) allows to be flooded on a local control channel of a layer type x (x=1, 2, 3, ..., n), having a value of Allow or Prohibit.

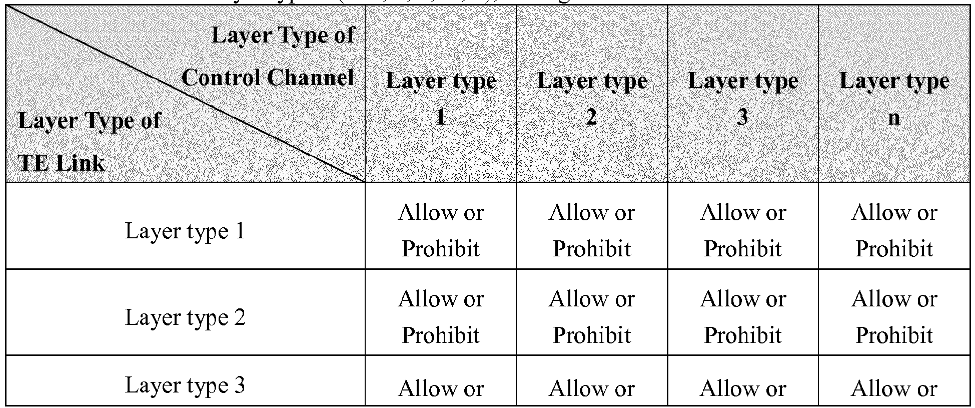

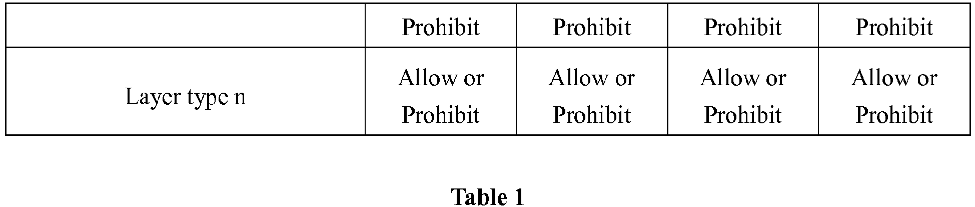

When generating a local TE link, a node identifies a layer type of the local TE link by a set value, for example, layer type 1, layer type 2, ..., or layer type n in Table 1, and when generating a local control channel, the node identifies a layer type of the local control channel by a set value, for example, layer type 1, layer type 2, ..., or layer type n in Table 1, and sets whether to allow or prohibit flooding data packets when identifying the set value corresponding to layer types of different TE links.

The layer type may be identified by a setting field independently, or identified by a combination of an encoding type field and a signal type field.

A setting field, such as a layer type field, may be used independently to identify a layer type of a TE link or a layer type of a control channel.

A combination of a one-byte encoding type field and a one-byte signal type field set in the prior art may also be used to identify a layer type.
(1) The meanings of values of the encoding type field are as follows:
   1 represents Packet;
   2 represents Ethernet;
   ......
   12 represents Optical Channel Data Unit-k (ODUk, Optical Channel Data Unit-k).
(2) The meanings of values of the signal type field when the value of the encoding type field is 12 are as follows:
   1 represents ODU1;
   2 represents ODU2;
   ......
   9 represents Optical Multiplex Section (OMS, Optical Multiplex Section);
   10 represents Optical Transmission Section (OTS, Optical Transmission Section).

Therefore, the encoding type field and the signal type field may also be combined to identify a layer type.

The method according to the embodiments of the present invention is described below by taking an Optical Transport Network (OTN, Optical Transport Network) including four nodes in optical and electrical layers as an example.

The same layer filtering rule is configured on four nodes A, B, C and D in advance, so that all TE LSA packets only can be flooded on control channels of OMS type, and are prohibited from being flooded on control channels of Optical Channel Transport Unit-k (OTUk, Optical Channel Transport Unit-k) type. The specific layer filtering rule is shown in Table 2.

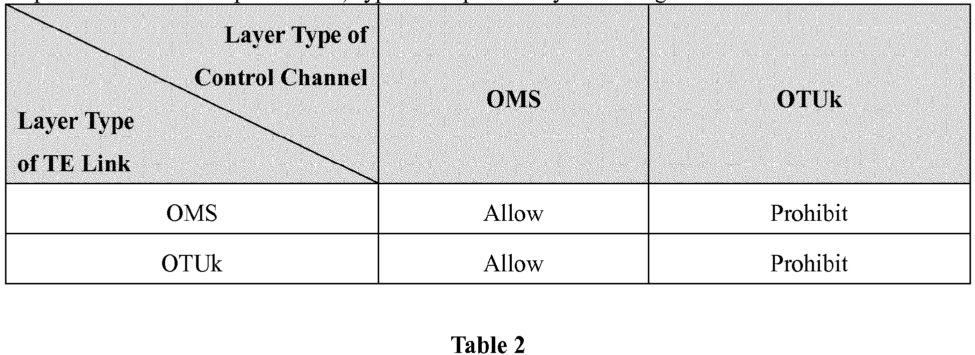

FIG. 3-a, FIG. 3-b, and FIG. 3-c are respectively schematic diagrams of different conditions of an OTN network according to Embodiment 3 of the present invention.

Before service layer paths are created, the TE network topology is shown in FIG. 3-a, including four TE links of OMS type, and the Data Communication Network (DCN, Data Communication Network) network topology is shown in FIG. 3-b, including four control channels on OMS links. Two Optical Channel (OCh, Optical Channel) service layer paths, namely, A-D-C and B-A-D, are created in the network, as shown in FIG. 3-c. At this time, two TE links of OTUk type, namely, links A-C and B-D, are added in the TE network topology, so that together with the existing four TE links of OMS type, there are six TE links in total; and two control channels on OTUk links are also added in the DCN network topology, so that there are 6 control channels in total.

FIG. 4 is a flowchart of an information transmission method according to Embodiment 3 of the present invention, which mainly includes the following steps.
Step 301: Obtain a TE LSA packet including attribute information of a TE link.
   The obtained TE LSA packet may be a TE LSA generated locally, or a TE LSA packet received from other nodes.
Step 302: Determine control channels allowing flooding a data packets.
   Before two OCh service layer paths are created, considering that the OSPF processes each of forward and backward directions of the TE link as unidirectional TE LSA, at this time, the maximum number of TE LSA packets flooded in the forward and backward directions of each control channel is 16. The calculation process is that: As there are four TE links, if forward and backward directions are considered for each link, the number of TE LSA packets is 4x2=8; if forward and backward directions are considered for each control channel, the number of TE LSA packets is 8x2=16. As there are four control channels, the total number of TE LSA packets flooded in the network is 4x16=64.
   After two OCh service layer paths are created, there are six TE links and six control channels. A layer type of the TE link corresponding to the attribute information of the TE link in the data packet is obtained, and according to the layer type of the TE link, it is obtained based on a preset filtering rule by looking up Table 2 that control channels on OMS links allow flooding and control channels on OTUk links prohibit flooding, thereby determining that control channels allowing flooding are four control channels of the layer type being OMS type.
   Accordingly, the maximum number of TE LSA packets flooded in the forward and backward directions of each control channel of OMS type in the network is 24. The calculation process is that: as there are six TE links, if forward and backward directions are considered for each link, the number of TE LSA packets is 6x2=12; if forward and backward directions are considered for each control channel, the number of TE LSA packets is 12x2=24. As only four control channels of OMS type allow flooding and all control channels of OTUk type do not allow flooding, the total number of TE LSA packets flooded in the network is 4x24=96. For the prior art where all control channels allow flooding, the total number is 6x24=144. Therefore, it can be seen that, by the method according to the embodiments of the present invention, the number of TE LSA packets sent is reduced by 48 as compared with the prior art, thereby reducing the amount of bandwidth occupied during information transmission, and effectively improving the routing performance of the network.
Step 303: Send the TE LSA packet from the control channels allowing flooding a data packet to connected a neighbor node.

In this step, only 96 TE LSA packets need to be sent through four control channels of OMS type that allow flooding.

Detailed description is given below by taking the node A as an example.

After two OCh service layer paths are created in the network as shown in FIG. 3-c, the node A generates three TE LSA packets locally, which are respectively TE LSA packets corresponding to the TE links A-B and A-D of OMS type and the TE link A-C of OTUk type. There are also three control channels on the node A, which are respectively the control channels A-B and A-D of OMS type and the control channel A-C of OTUk type. When the node A floods the locally generated TE LSA packets on the control channels, the three locally generated TE LSA packets are flooded only on the control channels A-B and A-D of OMS type according to the layer filtering rule of Table 2.

If the node A receives TE LSA packets sent from other nodes, the node A only receives TE LSA packets flooded from the neighbor nodes B, C and D and generated locally by the neighbor nodes B, C and D on the control channels A-B and A-D of OMS type, and as each neighbor node generates three TE LSA packets, the total number of TE LSA packets received by the node A from the three neighbor nodes is 3x3=9. Upon receiving the non-locally generated TE LSA packets, the node A labels the non-locally generated TE LSA packets with a layer type of the receiving control channels, that is, OMS type. The non-locally generated TE LSA packets also can only be flooded out on control channels of the same layer type, that is, control channels of OMS type. The embodiments of the present invention are described through an example where the same layer filtering rule is configured for different nodes, but different layer filtering rules may also be configured for different nodes, in which case when a node receives TE LSA packets sent from other nodes, the node cannot determine control channels allowing flooding according to the locally configured layer filtering rule, but determines control channels of the same layer type as the receiving control channels as control channels allowing flooding.

According to the above, the node A can flood at most 9+3=12 TE LSA packets on the control channels A-B and A-D of OMS type, and as the control channels of OTUk type prohibit flooding, and only two control channels A-B and A-D of OMS type allow flooding, the node A floods out 2x12=24 TE LSA packets in total.

Processing mechanisms and procedures of other nodes are similar to those of the node A. If statistics are collected regarding the four nodes A, B, C and D, the total number of TE LSA packets flooded in the network is 4x24=96, so that the number of TE LSA packets sent is reduced by 48 as compared with the prior art, thereby reducing the amount of bandwidth occupied during information transmission, and effectively improving the routing performance of the network.

The information transmission method according to the embodiments of the present invention is described in detail above. Correspondingly, embodiments of the present invention provide a communication device and a communication system.

FIG. 5 is a schematic structural diagram of a communication device according to an embodiment of the present invention.

As shown in FIG. 5, the communication device includes a data packet obtaining unit 51, a channel selecting unit 52, and a data packet sending unit 53.

### Implementation 1:

The data packet obtaining unit 51 is configured to, in a multi-layer network, obtain a data packet including attribute information of a traffic engineering link locally.

The channel selecting unit 52 is configured to, according to a layer type of the traffic engineering link corresponding to the attribute information of the traffic engineering link in the data packet, look up a control channel allowing flooding the data packet based on a preset filtering rule, where the filtering rule includes a corresponding relationship between a layer type of the control channel and the layer type of the traffic engineering link.

The data packet sending unit 53 is configured to send the data packet from the control channel allowing flooding the data packet to connected a neighbor communication device.

### Implementation 2:

The data packet obtaining unit 51 is configured to, in a multi-layer network, obtain a data packet non-locally.

The channel selecting unit 52 is configured to determine a layer type of a control channel receiving the data packet; and use a control channel of the same layer type as the control channel receiving the data packet as a control channel allowing flooding the data packet.

The data packet sending unit 53 is configured to send the data packet from the control channel allowing flooding the data packet to connected a neighbor communication device.

The communication device may further include an identifying unit 54.

The identifying unit 54 is configured to identify the layer type by a layer type field independently, or identify the layer type by a combination of an encoding type field and a signal type field.

FIG. 6 is a schematic structural diagram of a communication system according to an embodiment of the present invention.

As shown in FIG. 6, the communication system includes a first communication device 61 and one or more second communication devices 62.

### Implementation 1:

The first communication device 61 is configured to, in a multi-layer network, obtain a data packet including attribute information of a traffic engineering link locally; according to a layer type of the traffic engineering link corresponding to the attribute information of the traffic engineering link in the data packet, look up a control channel allowing flooding the data packet based on a preset filtering rule, where the filtering rule includes a corresponding relationship between a layer type of the control channel and the layer type of the traffic engineering link; and send the data packet from the control channel allowing flooding the data packet to connected a neighbor communication device.

The second communication device 62 is configured to receive the data packet sent from the first communication device.

### Implementation 2:

The first communication device 61 is configured to, in a multi-layer network, obtain a data packet non-locally; determine a layer type of a control channel receiving the data packet; use a control channel of the same layer type as the control channel receiving the data packet as a control channel allowing flooding the data packet; and send the data packet from the control channel allowing flooding the data packet to connected a neighbor communication device.

The second communication device 62 is configured to receive the data packet sent from the first communication device.

The first communication device 61 has the structure shown in FIG. 5, and reference may be made to the above description for details, which will not be repeated herein.

It should be noted that, information interactions and implementation processes between the units in the above device and system are based on the same concept as the method embodiments of the present invention, so reference may be made to the description in the method embodiments of the present invention for detail, which will not be repeated herein.

Based on the above, the technical solution according to the embodiments of the present invention is that, in a multi-layer network, according to a layer type of a traffic engineering link corresponding to attribute information of the traffic engineering link in a locally obtained data packet, a control channel allowing flooding the data packet is looked up based on a preset filtering rule, and then the obtained data packet is sent from the control channel allowing flooding to connected a neighbor node, so that unlike the prior art, the obtained data packet does not need to be sent on all control channels. Therefore, the number of data packets sent may be greatly reduced, thereby reducing the amount of bandwidth occupied during information transmission, and effectively improving the routing performance of the network.

The technical solution according to the embodiments of the present invention may also be that, in a multi-layer network, when a data packet is obtained non-locally, a layer type of a control channel receiving the data packet is determined; a control channel of the same layer type as the control channel receiving the data packet is used as a control channel allowing flooding the data packet, and then the obtained data packet is sent from the control channel allowing flooding to connected a neighbor node, so that unlike the prior art, the obtained data packet does not need to be sent on all control channels. Therefore, the number of data packets sent may be greatly reduced, thereby reducing the amount of bandwidth occupied during information transmission, and effectively improving the routing performance of the network.

Persons of ordinary skill in the art can understand that all or part of the steps of the methods according to the embodiments of the present invention may be implemented by a program instructing relevant hardware. The program may be stored in a computer readable storage medium. The storage medium may include a Read Only Memory (ROM, Read Only Memory), a Random Access Memory (RAM, Random Access Memory), a magnetic disk, or an optical disk.

The information transmission method, communication device and communication system according to the embodiments of the present invention are described in detail above. The principle and implementation of the present invention are described herein through specific examples. The description about the embodiments of the present invention is merely provided for ease of understanding of the method and core ideas of the present invention. Persons of ordinary skill in the art can make variations and modifications to the present invention in terms of the specific implementations and application scopes according to the ideas of the present invention. Therefore, the specification shall not be construed as a limit to the present invention.

## Claims

1. An information transmission method, comprising:
obtaining (101), by a node in a multi-layer network, being a network formed by nodes having different switching granularities, a Traffic Engineering Link State Advertisement, TE LSA, packet comprising attribute information of a traffic engineering link, wherein the TE LSA packet is generated by the node; determining (102), by the node and according to a layer type of the traffic engineering link corresponding to the attribute information of the traffic engineering link in the TE LSA packet and a preset filtering rule, control channels allowing flooding of the TE LSA packet, wherein the preset filtering rule comprises a corresponding relationship between a layer type of control channels of the node and the layer type of the traffic engineering link; and
sending (103), by the node, the TE LSA packet via the determined control channels to a connected neighbor node.

2. The information transmission method according to claim 1, wherein:
the layer type is identified by a layer type field independently, or identified by a combination of an encoding type field and a signal type field.

3. An information transmission method, comprising:
obtaining (201), by a node in a multi-layer network, being a network formed by nodes having different switching granularities, a Traffic Engineering Link State Advertisement, TE LSA, packet from a neighbor node ;
determining (202), by the node, a layer type of a control channel of the node, wherein the control channel of the node is the channel via which the TE LSA packet is received;
using, by the node, control channels of the same layer type as the control channel via which the TE LSA packet is received as control channels allowing flooding of the TE LSA packet; and
sending (203), by the node, the TE LSA packet via the control channels allowing flooding the TE LSA packet to a connected neighbor node.

4. The information transmission method according to claim 3, wherein:
the layer type is identified by a layer type field independently, or identified by a combination of an encoding type field and a signal type field.

5. A communication device, comprising:
a data packet obtaining unit (51), configured to, in a multi-layer network, being a network formed by nodes having different switching granularities, obtain (101) a Traffic Engineering Link State Advertisement, TE LSA, packet comprising attribute information of a traffic engineering link, wherein the TE LSA packet is generated by the communication device;
a channel selecting unit (52), configured to, according to a layer type of the traffic engineering link corresponding to the attribute information of the traffic engineering link in the TE LSA packet and a preset filtering rule, determine (102) control channels allowing flooding of the TE LSA packet, wherein the preset filtering rule comprises a corresponding relationship between a layer type of control channels of the communication device and the layer type of the traffic engineering link; and
a data packet sending unit (53), configured to send (103) the TE LSA packet from the control channel allowing flooding the TE LSA packet to a connected neighbor communication device.

6. The communication device according to claim 5, further comprising:
an identifying unit (54), configured to identify the layer type by a layer type field, or identify the layer type by a combination of an encoding type field and a signal type field.

7. A communication system, comprising a first communication device (61) according to any one of claims 5 to 6 and a second communication device (62), wherein
the second communication device (62) is configured to receive the Traffic Engineering Link State Advertisement, TE LSA, packet sent from the first communication device (61).

8. A communication device, comprising:
a data packet obtaining unit (51), configured to, in a multi-layer network, being a network formed by nodes having different switching granularities, obtain a (201) Traffic Engineering Link State Advertisement, TE LSA, packet, wherein the TE LSA packet is received from a neighbor node ;
a channel selecting unit (52), configured to determine (202) a layer type of a control channel, wherein the control channel is the channel via which the TE LSA packet is received; and use control channels of the same layer type as the control channel via which the TE LSA packet is received as control channels allowing flooding of the TE LSA packet; and
a data packet sending unit (53), configured to send (203) the TE LSA packet via the control channels allowing flooding of the TE LSA packet to a connected neighbor communication device.

9. The communication device according to claim 8, further comprising:
an identifying unit (54), configured to identify the layer type by a layer type field, or identify the layer type by a combination of an encoding type field and a signal type field.

10. A communication system, comprising a first communication device (61) according to any one of claims 8 to 9 and a second communication device (62), wherein
the second communication device (62) is configured to receive the Traffic Engineering Link State Advertisement, TE LSA, packet sent from the first communication device (61).

## Patentansprüche

1. Informationsübertragungsverfahren, umfassend:
Erhalten (101) durch einen Knoten in einem mehrschichtigen Netz, das ein durch Knoten mit unterschiedlichen Schaltauflösungen gebildetes Netz ist, eines TE-LSA(Traffic Engineering Link State Advertisement - Verkehrstechnik-Verbindungszustandsanzeige)-Pakets, umfassend Eigenschaftsinformationen einer Verkehrstechnikverbindung, wobei das TE-LSA-Paket durch den Knoten erzeugt wird;
Bestimmen (102) durch den Knoten und gemäß einer Schichtart der Verkehrstechnikverbindung entsprechend den Eigenschaftsinformationen der Verkehrstechnikverbindung in dem TE-LSA-Paket und einer voreingestellten Filterungsregel von Steuerkanälen, die Einfließen des TE-LSA-Pakets zulassen, wobei die voreingestellte Filterungsregel ein entsprechendes Verhältnis zwischen einer Schichtart von Steuerkanälen des Knotens und der Schichtart der Verkehrstechnikverbindung umfasst; und
Senden (103) durch den Knoten des TE-LSA-Pakets über die bestimmten Steuerkanäle zu einem verbundenen Nachbarknoten.

2. Informationsübertragungsverfahren nach Anspruch 1, wobei:
die Schichtart durch ein Schichtartfeld unabhängig gekennzeichnet wird oder durch eine Kombination eines Codierungsartfeldes und eines Signalartfeldes gekennzeichnet wird.

3. Informationsübertragungsverfahren, umfassend:
Erhalten (201) durch einen Knoten in einem mehrschichtigen Netz, das ein durch Knoten mit unterschiedlichen Schaltauflösungen gebildetes Netz ist, eines TE-LSA(Traffic Engineering Link State Advertisement - Verkehrstechnik-Verbindungszustandsanzeige)-Pakets von einem Nachbarknoten;
Bestimmen (202) durch den Knoten einer Schichtart eines Steuerkanals des Knotens, wobei der Steuerkanal des Knotens der Kanal ist, über den das TE-LSA-Paket empfangen wird;
Benutzen durch den Knoten von Steuerkanälen der gleichen Schichtart wie der Steuerkanal, über den das TE-LSA-Paket empfangen wird, als Einfließen des TE-LSA-Pakets zulassende Steuerkanäle; und
Senden (203) durch den Knoten des TE-LSA-Pakets über die Steuerkanäle, die Einfließen des TE-LSA-Pakets in einen verbundenen Nachbarknoten zulassen.

4. Informationsübertragungsverfahren nach Anspruch 3, wobei
die Schichtart unabhängig durch ein Schichtartfeld gekennzeichnet wird oder durch eine Kombination eines Codierungsartfeldes und eines Signalartfeldes gekennzeichnet wird.

5. Kommunikationsvorrichtung, umfassend:
eine Datenpaketerhaltungseinheit (51), eingerichtet zum, in einem mehrschichtigen Netz, das ein Netz gebildet durch Knoten mit unterschiedlichen Schaltauflösungen ist, Erhalten (101) eines TE-LSA(Traffic Engineering Link State Advertisement - Verkehrstechnik-Verbindungszustandsanzeige)-Pakets umfassend Eigenschaftsinformationen einer Verkehrstechnikverbindung, wobei das TE-LSA-Paket durch die Kommunikationsvorrichtung erzeugt wird;
eine Kanalwähleinheit (52), eingerichtet zum, gemäß einer Schichtart der Verkehrstechnikverbindung entsprechend den Eigenschaftsinformationen der Verkehrstechnikverbindung in dem TE-LSA-Paket und einer voreingestellten Filterungsregel, Bestimmen (102) von Steuerkanälen, die Einfließen des TE-LSA-Pakets zulassen, wobei die voreingestellte Filterungsregel ein entsprechendes Verhältnis zwischen einer Schichtart von Steuerkanälen der Kommunikationsvorrichtung und der Schichtart der Verkehrstechnikverbindung umfasst; und
eine Datenpaketsendeeinheit (53), eingerichtet zum Senden (103) des TE-LSA-Pakets von dem Steuerkanal, der Einfließen des TE-LSA-Pakets in eine verbundene Nachbarkommunikationsvorrichtung zulässt.

6. Kommunikationsvorrichtung nach Anspruch 5, weiterhin umfassend:
eine Kennzeichnungseinheit (54), eingerichtet zum Kennzeichnen der Schichtart durch ein Schichtartfeld oder Kennzeichnen der Schichtart durch eine Kombination eines Codierungsartfeldes und eines Signalartfeldes.

7. Kommunikationssystem, umfassend eine erste Kommunikationsvorrichtung (61) nach einem beliebigen der Ansprüche 5 bis 6 und eine zweite Kommunikationsvorrichtung (62), wobei
die zweite Kommunikationsvorrichtung (62) eingerichtet ist zum Empfangen des TE-LSA(Traffic Engineering Link State Advertisement - Verkehrstechnik-Verbindungszustandsanzeige)-Pakets, gesendet von der ersten Kommunikationsvorrichtung (61).

8. Kommunikationsvorrichtung, umfassend:
eine Datenpaketerhaltungseinheit (51), eingerichtet zum, in einem mehrschichtigen Netz, das ein durch Knoten mit unterschiedlichen Schaltauflösungen gebildetes Netz ist, Erhalten eines (201) TE-LSA(Traffic Engineering Link State Advertisement - Verkehrstechnik-Verbindungszustandsanzeige)-Pakets, wobei das TE-LSA-Paket von einem Nachbarknoten empfangen wird;
eine Kanalwähleinheit (52), eingerichtet zum Bestimmen (202) einer Schichtart eines Steuerkanals, wobei der Steuerkanal der Kanal ist, über den das TE-LSA-Paket empfangen wird; und Steuerkanäle der gleichen Schichtart wie der Steuerkanal, über den das TE-LSA-Paket empfangen wird, als Steuerkanäle zu benutzen, die Einfließen des TE-LSA-Pakets erlauben; und
eine Datenpaketsendeeinheit (53), eingerichtet zum Senden (203) des TE-LSA-Pakets über die Steuerkanäle, die Einfließen des TE-LSA-Pakets zu einer verbundenen Nachbarkommunikationsvorrichtung erlauben.

9. Kommunikationsvorrichtung nach Anspruch 8, weiterhin umfassend:
eine Kennzeichnungseinheit (54), eingerichtet zum Kennzeichnen der Schichtart durch ein Schichtartfeld oder Kennzeichnen der Schichtart durch eine Kombination eines Codierungsartfeldes und eines Signalartfeldes.

10. Kommunikationssystem, umfassend eine erste Kommunikationsvorrichtung (61) nach einem beliebigen der Ansprüche 8 bis 9 und eine zweite Kommunikationsvorrichtung (62), wobei
die zweite Kommunikationsvorrichtung (62) zum Empfangen des von der ersten Kommunikationsvorrichtung (61) gesendeten TE-LSA(Traffic Engineering Link State Advertisement - Verkehrstechnik-Verbindungszustandsanzeige)-Pakets eingerichtet ist.

## Revendications

1. Procédé de transmission d'informations, comprenant les étapes consistant à :
obtenir (101), par un noeud dans un réseau multicouche, qui est un réseau formé par des noeuds ayant différentes granularités de commutation, un paquet d'annonce d'état de liaison d'ingénierie de trafic, LSA TE, comprenant des informations d'attributs d'une liaison d'ingénierie de trafic, dans lequel le paquet LSA TE est généré par le noeud ;
déterminer (102), par le noeud et en fonction d'un type de couche de la liaison d'ingénierie de trafic correspondant aux informations d'attributs de la liaison d'ingénierie de trafic dans le paquet LSA TE et d'une règle de filtrage prédéfinie, des canaux de commande permettant l'inondation du paquet LSA TE, dans lequel la règle de filtrage prédéfinie comprend un rapport correspondant entre un type de couche des canaux de commande du noeud et le type de couche de la liaison d'ingénierie de trafic ; et
envoyer (103), par le noeud, le paquet LSA TE par le biais des canaux de commande déterminés vers un noeud voisin connecté.

2. Procédé de transmission d'informations selon la revendication 1, dans lequel :
le type de couche est identifié par un champ de type de couche indépendamment, ou
identifié par une combinaison d'un champ de type de codage et d'un champ de type de signal.

3. Procédé de transmission d'informations, comprenant les étapes consistant à :
obtenir (201), par un noeud dans un réseau multicouche, qui est un réseau formé par des noeuds ayant différentes granularités de commutation, un paquet d'annonce d'état de liaison d'ingénierie de trafic, LSA TE, à partir d'un noeud voisin ;
déterminer (202), par le noeud, un type de couche d'un canal de commande du noeud, dans lequel le canal de commande du noeud est le canal par lequel le paquet LSA TE est reçu ;
utiliser, par le noeud, des canaux de commande du même type de couche en tant que canal de commande par lequel le paquet LSA TE est reçu en tant que canaux de commande permettant l'inondation du paquet LSA TE ; et
envoyer (203), par le noeud, le paquet LSA TE par le biais des canaux de commande permettant l'inondation du paquet LSA TE vers un noeud voisin connecté.

4. Procédé de transmission d'informations selon la revendication 3, dans lequel :
le type de couche est identifié par un champ de type de couche indépendamment, ou identifié par une combinaison d'un champ de type de codage et d'un champ de type de signal.

5. Dispositif de communication, comprenant :
une unité d'obtention de paquets de données (51), configurée pour, dans un réseau multicouche, être un réseau formé par des noeuds ayant différentes granularités de commutation, obtenir (101) un paquet d'annonce d'état de liaison d'ingénierie de trafic, LSA TE, comprenant des informations d'attributs d'une liaison d'ingénierie de trafic, dans lequel le paquet LSA TE est généré par le dispositif de communication ;
une unité de sélection de canal (52), configurée pour, en fonction d'un type de couche de la liaison d'ingénierie de trafic correspondant aux informations d'attributs de la liaison d'ingénierie de trafic dans le paquet LSA TE et d'une règle de filtrage prédéfinie, déterminer (102) des canaux de commande permettant l'inondation du paquet LSA TE, dans lequel la règle de filtrage prédéfinie comprend un rapport correspondant entre un type de couche des canaux de commande du dispositif de communication et le type de couche de la liaison d'ingénierie de trafic ; et
une unité d'envoi de paquets de données (53), configurée pour envoyer (103) le paquet LSA TE du canal de commande permettant l'inondation du paquet LSA TE vers un dispositif de communication voisin connecté.

6. Dispositif de communication selon la revendication 5, comprenant en outre :
une unité d'identification (54), configurée pour identifier le type de couche par un champ de type de couche, ou identifier le type de couche par une combinaison d'un champ de type de codage et d'un champ de type de signal.

7. Système de communication, comprenant un premier dispositif de communication (61) selon l'une quelconque des revendications 5 à 6 et un second dispositif de communication (62), dans lequel :
le second dispositif de communication (62) est configuré pour recevoir le paquet d'annonce d'état de liaison d'ingénierie de trafic, LSA TE, envoyé depuis le premier dispositif de communication (61).

8. Dispositif de communication, comprenant :
une unité d'obtention de paquets de données (51), configurée pour, dans un réseau multicouche, être un réseau formé par des noeuds ayant différentes granularités de commutation, obtenir (201) un paquet d'annonce d'état de liaison d'ingénierie de trafic, LSA TE, dans lequel le paquet LSA TE est reçu à partir d'un noeud voisin ;
une unité de sélection de canal (52), configurée pour déterminer (202) un type de couche d'un canal de commande, dans lequel le canal de commande est le canal par lequel le paquet LSA TE est reçu ; et utiliser les canaux de commande du même type de couche en tant que canal de commande par lequel le paquet LSA TE est reçu en tant que canaux de commande permettant l'inondation du paquet LSA TE ; et
une unité d'envoi de paquets de données (53), configurée pour envoyer (203) le paquet LSA TE par le biais des canaux de commande permettant l'inondation du paquet LSA TE vers un dispositif de communication voisin connecté.

9. Dispositif de communication selon la revendication 8, comprenant en outre :
une unité d'identification (54), configurée pour identifier le type de couche par un champ de type de couche, ou identifier le type de couche par une combinaison d'un champ de type de codage et d'un champ de type de signal.

10. Système de communication, comprenant un premier dispositif de communication (61) selon l'une quelconque des revendications 8 à 9 et un second dispositif de communication (62), dans lequel :
le second dispositif de communication (62) est configuré pour recevoir le paquet d'annonce d'état de liaison d'ingénierie de trafic, LSA TE, envoyé à partir du premier dispositif de communication (61).
